# EUROPEAN PATENT SPECIFICATION

(11) **EP 0 949 329 B1**
(45) Date of publication and mention of the grant of the patent: **28.01.2004**
(21) Application number: 98830214.7
(22) Date of filing: 08.04.1998
(51) Int. Cl.: C12C 11/00, C12G 3/02

(54) **Gluten-free beer**
Glutenfreies Bier
Bière sans gluten

(43) Date of publication of application: 13.10.1999
(73) Proprietor: Heineken Italia S.p.A., 11020 Pollein (Aosta) (IT); Heinz Italia S.r.l., Latina (IT)
(72) Inventor: Maccagnan, Giovanni, 41058 Vignola, Modena (IT); Pat, Antonio, 32032 Feltre, Belluno (IT); Collavo, Francesco, 32031 Alano Di Piave, Belluno (IT); Ragg, Gian Luca, 20133 Milano (IT); Bellini, Marina Pieranna, 20151 Milano (IT)
(74) Representative: Falcetti, Carlo

(56) References cited:
- EP-A- 0 138 356
- DE-A- 1 442 186
- FR-A- 2 707 996
- GB-A- 1 184 032
- GB-A- 1 304 854
- US-A- 4 622 224
- DATABASE WPI Section Ch, Week 9837 Derwent Publications Ltd., London, GB; Class D16, AN 98-435485 XP002083600 & RU 2 103 341 C (AMUR-PIVO STOCK CO) , 27 January 1998
- DATABASE WPI Section Ch, Week 9747 Derwent Publications Ltd., London, GB; Class B04, AN 97-504325 XP002083601 & CN 1 124 287 A (SHU Z), 12 June 1996

## Description

The present invention relates to a new type of beer which can be tolerated by celiac disease sufferers.

Celiac disease is characterized by persistent intolerance to gluten, which induces atrophy of the jejunal villi, with hyperplasia of the crypts and poor absorption of many nutrient substances, with the consequent clinical signs and symptoms, such as weight loss, diarrhoea, abdominal swelling, anaemia caused by iron or vitamin deficiency, osteoporosis and the like. Epidemiological studies carried out in Europe have reported a prevalence of celiac disease in adults of 1:950 in Sweden and 1:1700 in Scotland. These data are based on symptomatic and diagnosed cases, but it is commonly believed that the actual prevalence of celiac disease is considerably higher and that, in the general population, it is close to 1:300.

Celiac disease sufferers must thus avoid consuming gluten-containing aliments such as, for example, beer; beer is an aliment produced by alcoholic fermentation of sugary wort prepared by the diastasic saccharification of barley starch, to which other types of cereals are optionally added. However, barley contains a large amount of gluten and thus makes beer an aliment which must be excluded at all costs from the diet of celiac disease sufferers.

The problem underlying the present invention is thus to provide a new beer which can be consumed by this sizeable proportion of the population.

Gluten free beverages are known, quite different in appearance and taste from the western beer, basically obtained from barley malt and possible adjuncts used to reduce the product cost.

Examples are the Japanese "Saké" obtained from rice and the South African beer obtained from sorghum.

In order to reduce costs, several proposals have been made:

GB-A-1 304 854 discloses a process for producing a brewer wort where α-amylase, β-amylase and protease are used for digesting and saccharifying any kind of starchy material, including buck wheat.

However, with the specific aim of producing beer, barley, with possible adjuncts, is recommended.

Likewise GB-A-1 184 032 discloses a process for producing sorghum corn beer by hydrolysis with enzymes. This beverage, which is gluten free, even if called beer is quite different from conventional western beer.

The Chinese Pat. Appl. 1994CN-0118781 discloses a process for producing beer where buck wheat is used as an adjunct to barley malt.

DE 14 42 186 A (and equivalent US-A-3,067,066) disclose a method for obtaining a syrup by multiple hydrolysis of starch, in particular corn starch. They suggest that the syrup can be used in wine beer or other fermentation industry, but does not define any mixture of ingredients including the syrup, leading to a conventional western beer.

No one of the above references is concerned with the problem of providing a gluten-free beer which has organoleptic properties and an appearance which are entirely comparable with those of beer from barley malt.

Buck wheat has suitable beermaking properties, as regards both appearance and taste, and can thus be used as a replacement from barley.

However buck wheat does not contain the enzymes required to hydrolyse starch to maltose, and so these enzymes, preferably α-amylase and glucanase, must be added separately.

The problem is solved according to the present invention, by a gluten-free beer obtainable from a mixture consisting of 40-80% by weight of buck wheat and from 20 to 60% by weight of a syrup obtained by the hydrolysis of gluten-free starch such as, for example, corn starch, rice starch, potato starch, etc. The syrup used is preferably a syrup obtained by the hydrolysis of corn starch, which will be referred to hereinbelow simply as corn syrup.

The use of a gluten-free cereal syrup instead of the cereal itself has the advantage of making it no longer necessary for the cereal to undergo the saccharification step, thereby simplifying the entire production process considerably.

In a particularly preferred embodiment, the mixture is composed of buck wheat in a variable amount of from 40 to 60% by weight, and corn syrup in a variable amount of from 40 to 60% by weight. Excellent results are obtained when the mixture is composed of buck wheat and corn syrup in a weight ratio of 50:50.

Should the mixture of starting materials not have a sufficient amount of water-soluble proteins to give the beer obtained therefrom the required organoleptic properties, such as, for example, the presence and consistency of the head, a protease which is capable of making some of the protein content of the cereals water-soluble may be added to the starting mixture.

The beer according to the invention advantageously contains a colouring agent, preferably caramel.

The present invention also relates to a method for producing the gluten-free beer described above, this method comprising a stage of saccharifying a mixture comprising at least one gluten-free cereal and saccharification enzymes.

The beer according to the present invention has the great advantage of being entirely free of gluten and thus can be consumed by celiac disease sufferers without giving rise to the abovementioned undesired effects, and at the same time having organoleptic properties and an appearance which are entirely comparable with those of beer from barley malt. Not only the odour and the taste, but also the amount and consistency of the head which forms when the beer is poured into a glass, are entirely similar to those of conventional beer.

The invention will now be described in its preferred embodiments, by way of non-limiting examples, in order to allow it to be understood more clearly.

### Example 1

2650 kg of buck wheat, 3.5 kg of calcium chloride, 4 kg of calcium sulphate, 13 kg of caramel (EU category E150C) and 9 m³ of water are mashed in a copper for a period of 30 min and at a temperature of 50°C. 4.5 kg of α-amylase is added to the mixture thus obtained, which is then raised to 78°C over a period of 15 min, left at this temperature for a period of 15 min and then brought to the boiling point and left at that temperature for 30 min. Next, the mash is cooled to 64°C by addition of 6.5 m³ of water. 5 litres of ortho-phosphoric acid are also added, giving the mash a pH of 5.6 ± 0.1. The contents of the copper are transferred into a mash tun, into which 4.5 kg of a mixture of glucanase and α-amylase (1:1) and 4.5 kg of protease are added. At this point the saccharification stage starts, during which the starches contained in the buck wheat are converted into fermentable sugars by the action of the added enzymes, and the mixture remains at a temperature of 64°C for 30 min.

The temperature is then raised to 72°C over a period of 15 minutes and is maintained at this value for 25 min; the temperature is then raised to 76°C (ideal temperature for the filtration) and is maintained at this value for 10 min. At this point, the liquid (first wort) is separated out and about 10 m³ of water are then added in order to extract all of the sugar from the spent grains. The filtrate thus obtained is transferred into a cooking copper and 3 m³ of water and 2650 kg of corn syrup are added (50:50 buck wheat/corn syrup weight ratio).

The mixture thus obtained is boiled until 7-8% of the total mass has evaporated off.

As soon as the mixture begins to boil, 4 kg of HNB hop extract with 30% of alpha acids and 6 litres of ortho-phosphoric acid are added in order to give the solution a pH of 5.2 ± 0.1. After boiling for 40 minutes, a further 10 kg of Pel.T90 hops are added. The product thus obtained is then transferred into a whirlpool in order to separate the coagulated proteins and the hop grain from the liquid phase.

A wort is thus obtained which is ready for fermentation. To this end, it is cooled to a temperature of 13°C, aerated with 10 ppm of oxygen and *Saccharomyces carlsbergensis* yeast is added, which is purified beforehand of any possible trace of gluten by repeated washing with water, and in solution at a concentration of 50% (one litre per one hundred litres of wort, so as to obtain a density of 16 million cells/ml).

The initial fermentation temperature is 13°C, but rises to 14°C within the first 12 hours. The liquid then remains at this temperature until a value of 5°P is reached, after which the temperature is allowed to increase to a maximum of 16°C, and remains at this value until the fermentation is complete and a total diacetyl concentration of < 0.15 ppm is reached (168-192 hours).

The beer is then separated from the yeast, transferred and matured by conventional techniques.

The gluten-free beer thus obtained has the following characteristics:

| | | | |
|---|---|---|---|
| Original gravity (%w) | 11.30 | pH | 3.8 |
| Original gravity (%v) | 11.79 | Head retention (sec) | 250 |
| Real extract (%v) | 3.75 | Colour (EBC) | 6.0 |
| Apparent extract (%v) | 1.90 | Bitterness (EBU) | 20 |
| Alcohol (%v) | 5.0 | Total nitrogen (mg/l) | 180 |
| Limit attenuation (%) | 87.0 | CO₂ (g/l) | 5.5 |

### Example 2

The process described in Example 1 is repeated with the same experimental methods and procedures, changing only the amounts of the starting materials, i.e. using 3180 kg of buck wheat and 2120 kg of corn syrup.

The gluten-free beer thus obtained has the following characteristics:

| | | | |
|---|---|---|---|
| Original gravity (%w) | 11.30 | pH | 3.9 |
| Original gravity (%v) | 11.79 | Head retention (sec) | 280 |
| Real extract (%v) | 3.75 | Colour (EBC) | 6.0 |
| Apparent extract (%v) | 1.90 | Bitterness (EBU) | 20 |
| Alcohol (%v) | 5.0 | Total nitrogen (mg/l) | 210 |
| Limit attenuation (%) | 87.0 | CO₂ (g/l) | 5.5 |

### Example 3

The process described in Example 1 is repeated with the same experimental methods and procedures, changing only the amounts of the starting materials, i.e. using 2120 kg of buck wheat and 3180 kg of corn syrup.

The gluten-free beer thus obtained has the following characteristics:

| | | | |
|---|---|---|---|
| Original gravity (%w) | 11.30 | pH | 3.7 |
| Original gravity (%v) | 11.79 | Head retention (sec) | 220 |
| Real extract (%v) | 3.75 | Colour (EBC) | 6.0 |
| Apparent extract (%v) | 1.90 | Bitterness (EBU) 20 | |
| Alcohol (%v) | 5.0 | Total nitrogen (mg/l) | 150 |
| Limit attenuation (%) | 87.0 | CO₂ (g/l) | 5.5 |

## Claims

1. A gluten-free beer obtainable from a mixture of starting material consisting of buck wheat in a variable amount of from 40 to 80% by weight, a syrup obtained by the hydrolysis of gluten-free starch, in a variable amount of from 20 to 60% by weight, and enzymes for saccharifying the starch contained in the buck wheat.

2. A beer according to claim 1, in which said syrup is obtained by the hydrolysis of corn starch.

3. A beer according to claim 2, in which said mixture is composed of buck wheat in a variable amount of from 40 to 60% by weight, and corn syrup in a variable amount of from 40 to 60% by weight.

4. A beer according to claim 2, in which said mixture is composed of buck wheat and corn syrup in a weight ratio of 50:50.

5. A beer according to any one of the preceding claims, in which said enzymes are α-amylase and glucanase.

6. A beer according to any one of the preceding claims, in which said enzymes comprise a protease.

7. A beer according to any one of the preceding claims, comprising a colouring agent.

8. A beer according to claim 7, in which said colouring agent is caramel.

9. A method of producing a gluten-free beer from a mixture of starting materials consisting of buck wheat in a variable amount of from 40 to 80% by weight and a syrup obtained from the hydrolysis of gluten-free starch in a variable amount of from 20 to 60% by weight, comprising the step of saccharifying said mixture.

10. The method of claim 9 where said syrup'is corn syrup.

11. The method of claim 9 or 10 in which the saccharification step is carried out in presence of amylolytic enzimes and glucanase.

12. The method of claim 9,10, or 11, in which protease enzymes are added to said mixture.

## Patentansprüche

1. Glutenfreies Bier, welches aus einer Mischung von einem Startmaterial erhalten wird, welches aus Buchweizen einer variablen Menge von 40 bis 80 Gewichtsprozent, einem Sirup, der durch Hydrolyse von glutenfreier Stärke in einer variablen Menge von 20 bis 60 Gewichtsprozent erhalten wird, und Enzymen besteht, um die Stärke, welche im Buchweizen enthalten ist, zu süßen.

2. Bier nach Anspruch 1, wobei der Sirup durch Hydrolyse von Maisstärke erhalten wird.

3. Bier nach Anspruch 2, wobei die genannte Mischung aus Buchweizen einer variablen Menge von 40 bis 60 Gewichtsprozent und aus Maissirup einer variablen Menge von 40 bis 60 Gewichtsprozent besteht.

4. Bier nach Anspruch 2, wobei die Mischung aus Buchweizen und Maissirup aus einem Gewichtsverhältnis von 50 : 50 besteht.

5. Bier nach einem der vorhergehenden Ansprüche, wobei die Enzyme α-Amylase und Glukose sind.

6. Bier nach einem der vorhergehenden Ansprüche, wobei die Enzyme Protease enthalten.

7. Bier nach einem der vorhergehenden Ansprüche, welches einen Farbwirkstoff enthält.

8. Bier nach Anspruch 7, wobei der Farbwirkstoff gebrannter Zucker ist.

9. Verfahren zum Herstellen eines glutenfreien Biers aus einer Mischung von Startmaterialien, die aus Buchweizen einer variablen Menge von 40 bis 80 Gewichtsprozent bestehen, und aus einem Sirup bestehen, der von der Hydrolyse glutenfreier Stärke einer variablen Menge von 20 bis 60 Gewichtsprozent erhalten wird, das folgenden Schritt aufweist: Süßen der Mischung.

10. Verfahren nach Anspruch 9, wobei die Sirup Maissirup ist.

11. Verfahren nach Anspruch 9 oder 10, bei dem der Süßungsschritt in Anwesenheit von amylolytischen Enzymen und Glukose ausgeführt wird.

12. Verfahren nach Anspruch 9, 10 oder 11, bei dem die Protease-Enzyme der Mischung hinzugefügt sind.

## Revendications

1. Bière sans gluten susceptible d'être obtenue à partir d'un mélange de matières premières consistant en du sarrasin en une quantité variable allant de 40 à 80% en poids, un sirop obtenu par l'hydrolyse d'amidon sans gluten, en une quantité variable allant de 20 à 60% en poids, et des enzymes pour la saccharification de l'amidon présent dans le sarrasin.

2. Bière selon la revendication 1, dans laquelle ledit sirop est obtenu par hydrolyse d'amidon de maïs.

3. Bière selon la revendication 2, dans laquelle ledit mélange est composé de sarrasin en une quantité variable allant de 40 à 60% en poids, et de sirop de maïs en une quantité variable allant de 40 à 60% en poids.

4. Bière selon la revendication 2, dans laquelle ledit mélange est composé de sarrasin et de sirop de mais en un rapport pondéral de 50:50.

5. Bière selon l'une quelconque des revendications précédentes, dans laquelle lesdites enzymes sont de l'α-amylase et de la glucanase.

6. Bière selon l'une quelconque des revendications précédentes, dans laquelle lesdites enzymes comprennent une protéase.

7. Bière selon l'une quelconque des revendications précédentes, comprenant un agent colorant.

8. Bière selon la revendication 7, dans laquelle l'agent colorant est du caramel.

9. Procédé de production d'une bière sans gluten à partir d'un mélange de matières premières consistant en du sarrasin en une quantité variable allant de 40 à 80% en poids et un sirop obtenu par l'hydrolyse d'amidon sans gluten en une quantité variable allant de 20 à 60% en poids, comprenant l'étape de saccharification dudit mélange.

10. Procédé selon la revendication 9, dans lequel le sirop est du sirop de mais.

11. Procédé selon la revendication 9 ou 10, dans lequel l'étape de saccharification est réalisée en présence d'enzymes amylolytiques et de glucanase.

12. Procédé selon la revendication 9, 10 ou 11, dans lequel des enzymes protéases sont ajoutées audit mélange.
